# EUROPÄISCHE PATENTANMELDUNG

(11) **EP 1 265 264 A2**
(43) Veröffentlichungstag der Anmeldung: **11.12.2002**
(21) Anmeldenummer: 02100675.4
(22) Anmeldetag: 07.06.2002
(51) Int. Cl.: H01J 9/24, H01J 5/52, H01J 61/06, H01J 65/04, H01J 61/30, C04B 37/04, C03C 3/087, C04B 35/468, H01J 61/42, H01J 61/16, H01J 61/20

(54) **Gasentladungslampe und Verfahren zu deren Herstellung**

(30) Priorität: 09.06.2001 DE 10128139
(71) Anmelder: Philips Corporate Intellectual Property GmbH, 20099 Hamburg (DE); Koninklijke Philips Electronics N.V., 5621 BA Eindhoven (NL)
(72) Erfinder: Rausenberger, Bernd, 52066, Aachen (DE); Braun, Norbert, 52066, Aachen (DE); Groen, Wilhelm-Albert, 52066, Aachen (DE); Kraus, Albrecht, 52066, Aachen (DE); Vorachen, Jozef, 52066, Aachen (DE); Roelevink, Bauke Jacob, 52066, Aachen (DE)
(74) Vertreter: Volmer, Georg, Dipl.-Ing.

(57) **Zusammenfassung**

Die Erfindung betrifft ein Verfahren zur Herstellung einer Gasentladungslampe (100) und eine Gasentladungslampe (100) als solche. Eine bekannte Gasentladungslampe (100) umfasst einen mit einem Gas gefüllten Glashohlkörper (120), wobei das Gas durch Energiezufuhr zum Aussenden von Licht angeregt wird, und zumindest eine an dem Glashohlkörper (120) befestigte Keramikelektrode (140a,140b) zum kapazitiven Einkoppeln von Energie in das Gas im Innern des Glashohlkörpers (120). Aufgabe der Erfindung ist es, die Herstellung der Gasentladungslampe (100) zu vereinfachen. Erfindungsgemäß geschieht dies dadurch, dass das Glasmaterial, aus welchem der Glashohlkörper (120) gebildet ist, und das Keramikmaterial, aus welchem die Keramikelektrode (140a,140b) gebildet ist, so ausgewählt werden, dass ihre beiden Temperatur-Ausdehnungskoeffizienten zumindest näherungsweise übereinstimmen und dass das Glasrohr durch Direkteinschmelzung an der Keramikelektrode (140a,140b) befestigt wird.

## Beschreibung

Die Erfindung betrifft ein Verfahren zur Herstellung einer Gasentladungslampe gemäß dem Oberbegriff des Patentanspruchs 1 und eine Gasentladungslampe als solche gemäß dem Oberbegeiff des Patentanspruchs 4.

Ein Verfahren zur Herstellung einer Gasentladungslampe sowie eine Gasentladungslampe als solche sind grundsätzlich, zB. aus der US 2, 624, 858 bekannt. Die dort offenbarte Gasentladungslampe 100' ist in Fig 3 dargestellt. Sie umfasst einen mit einem Gas gefüllten Glas-Hohlkörper 120, insbesondere ein Glasrohr, wobei das Gas durch Energiezufuhr zum Aussenden von Licht angeregt wird Die beiden offenen Enden des Glasrohres 120 sind durch dielektrische Elektroden 140a, 140b verschlossen Die Elektroden schließen das Glasrohr 120 gasdicht ab; dies wird zB. dadurch erreicht, dass die dielektischen Elektroden an das Glasrohr angelasiert (glazing) werden Die Elektroden dienen zum kapazitiven Einbringen von Energie in das Gas im Innern des Glasrohres.

Die genannte US-Schrift wurde bereits 1948 beim amerikanischen Patentamt eingereicht. Für die vorliegende Erfindung wird davon ausgegangen, dass zur damaligen Zeit unter dem in der US-Schrift genannten Begriff "glazing" ein Glasier-Verfahren verstanden wurde, bei dem die dielektrischen Elektroden 140a, 140b mit einer Glasur versehen wurden und das Glasrohr 120 an die Glasur angeglast, bzw. angeschmolzen wurde. Insofern war damals für das Herstellen einer Verbindung zwischen dem Glasrohr und den dielektrischen Elektroden ein Verbindungsmedium in Form der Glasur erforderlich.

Ausgehend von diesem Stand der Technik ist es die Aufgabe der Erfindung, ein bekanntes Verfahren zur Herstellung einer Gasentladungslampe und eine bekannte Gasentladungslampe selber derart weiterzubilden, dass die Herstellung der Gasentladungslampe vereinfacht wird.

Diese Aufgabe wird gemäß dem Verfahrensanspruch 1 dadurch gelöst, dass der Temperatur-Ausdehnungskoeffizient des Glasmaterials, aus welchem der Glashohlkörper gebildet ist, so gewählt wird, dass er mit dem thermischen Ausdehnungskoeffizienten des Keramikmaterials, aus welchem die Keramikelektrode gebildet ist, zumindest näherungsweise übereinstimmt und dass der Glashohlkörper per Direkteinschmelzung mit dem Keramikkörper verbunden wird

Vorteilhafterweise erfordert dieses Verbindungsverfahren keinerlei Verbindungsmedium, z.B. in Form einer Glasur oder eines Glaslotes, zwischen dem Glasmaterial und dem Keramikmaterial. Deshalb ist es gegenüber bekannten Verbindungsverfahren wesentlich vereinfacht.

Insofern unterscheidet sich das erfindungsgemäße Verfahren auch von dem in der nicht vorveröffentlichten Anmeldung DE 10014407.1 offenbarten Verfahren, welches zur Verbindung eines Glasrohres mit einem Kermamikrohr zur Herstellung einer Gasentladungslampe die Verwendung eines Glaslotes als Verbindungsmedium vorsieht.

Zwingend notwendige Voraussetzung für die Durchführung der erfindungsgemäßen Direkteinschmelzung ist allerdings die beanspruchte, möglichst gute Übereinstimmung der Temperatur-Ausdehnungskoeffizienten beider zu verbindender Materialien. Nur wenn diese Voraussetzung erfüllt ist, wird die Verbindung dauerhaft sein und nicht aufplatzen oder zerspringen.

Die bei dem erfindungsgemäßen Verfahren entstehende Verbindung ist vorteilhafterweise vakuumdicht und sehr stabil.

Die genannte Aufgabe der Erfindung wird weiterhin durch die Gasentladungslampe gemäß dem Patentanspruch 3 gelöst. Die Vorteile dieser Gasentladungslampe entsprechen den oben für das Herstellungsverfahren genannten Vorteilen.

Weitere vorteilhafte Ausgestaltungen des Herstellungsverfahrens und der Gasentladungslampe sind Gegenstand der Unteransprüche. Der Beschreibung sind zwei Figuren beigefügt, wobei
- Fig. 1: eine Gasentladungslampe gemäß der Erfindung
- Fig. 2: den Verlauf der Ausdehnung eines Glasmaterials im Vergleich zur Ausdehnung eines Keramikmaterials in Abhängigkeit der Temperatur; und
- Fig. 3: eine Gasentladungslampe nach dem Stand der Technik; zeigt.

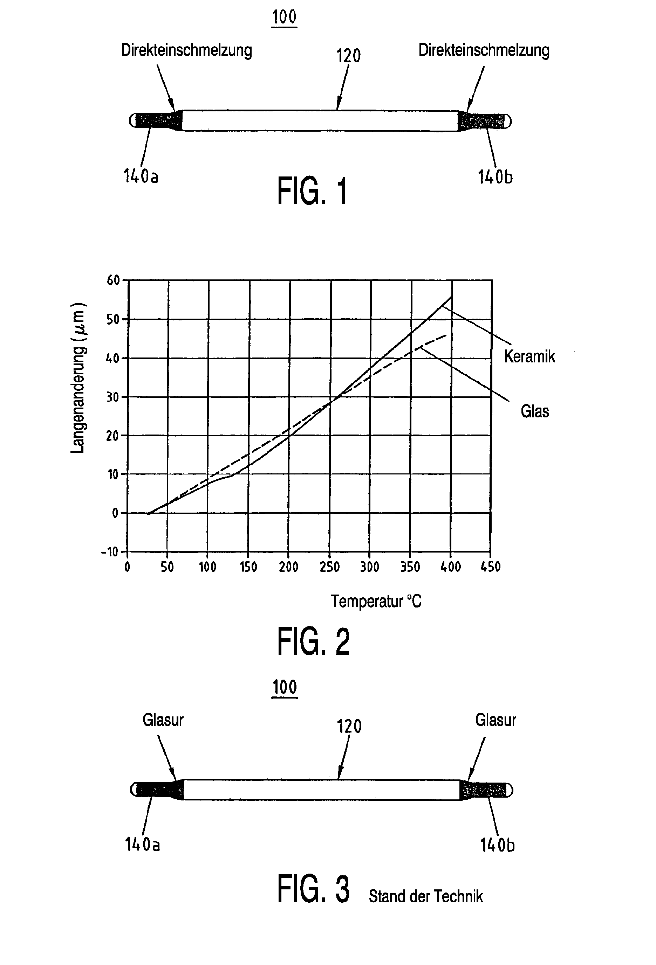

Figur 1 zeigt eine Gasentladungslampe 100 gemäß der Erfindung, welche im wesentlichen dieselben Komponenten, bezeichnet mit gleichen Bezugszeichen 120, 140a, 140b, aufweist, wie die oben unter Bezugnahme auf Fig 3 beschriebene Gasentladungslampe 100'.

Die Elektroden 140a und 140b sind bei der Erfindung als Keramikelektroden, mit vorzugsweise dielektrischen Materialeigenschaften, ausgebildet. Die Keramikelektroden weisen jeweils zumindest stellenweise eine leitfähige Beschichtung auf, welche als elektrisch-leitende Kontaktierungsfläche (nicht gezeigt) zum Anlegen einer elektrischen Spannung dient.

Im Unterschied zu der in Fig 3 dargestellten Gasentladungslampe 100' sind bei der erfindungsgemäßen Gasentladungslampe 100 gemäß Fig 1 das Glasrohr 120 und die beiden Keramikelektroden 140a, 140b zum Abschluss des Glasrohres 120 per Direkteinschmelzung verbunden.

Bei dem Verfahren der Direkteinschmelzung wird zunächst diejenige Stelle des Glashohlkörpers, z.B. ein offenes Endes des Glasrohres, an welcher der Glashohlkörper mit der Keramikelektrode verbunden werden soll, per Laser, per Brennerflamme oder in einem Ofen auf ca. Glas-Schmelztemperatur erhitzt. Gleichzeitig wird auch die Keramikelektrode auf dieselbe Temperatur erhitzt. Die Schmelztemperatur des Glases liegt allerdings weit unterhalb der Schmelztemperatur der Keramik, weshalb bei diesem Vorgang nur das Glas, nicht aber die Keramik schmilzt. Das geschmolzene Glas zerläuft sodann auf der Kermamikelektrode und verbindet sich mit deren Oberfläche. Auf diese Weise entsteht - insbesondere nach dem Abkühlen - eine gasdichte und überaus robuste Verbindung

Voraussetzung für die Dauerhaftigkeit und Robustheit dieser erfindungsgemäßen Verbindung ist allerdings, dass für die Verbindung nur solche Glas- und Keramikmaterialien ausgewählt und miteinander kombiniert werden, deren Temperatur-Ausdehnungskoeffizienten zumindest näherungsweise übereinstimmen.

Fig 2 zeigt das Ausdehnungsverhalten von eines Glasmaterials, hier Natronkalkweichglas mit folgender Gewichtsprozent-Komposition 68,1% SiO2; 1,2% Li2O; 3,0% SrO; 3,4% Al2O3; 8,7% BaO; 1,9% CaO; 7,3% Na2O; 5,0% K2O und 1,3% MgO, im Vergleich zu einem Keramikmaterial, hier BaTiO3 mit folgenden Gewichtsprozent-Dotierungen 1,6% Nb2O5; 1,6% CoO und 1,6% Mn2O3, in Abhängigkeit der Temperatur. Die beiden dargestellten Kurven für das benannte Glas- und Keramikmaterial verlaufen über einen relevanten, weiten Temperaturbereich von 0 - 350°C dicht beieinander und berühren sich sogar stellenweise. Das heißt, die Temperatur-Ausdehnungskoeffizienten beider Materialien liegen hinreichend dicht beieinander; die beiden Materialien sind deshalb für eine Verbindung per Direkteinschmelzung gut geeignet. Ein Aufspringen oder Bersten der Verbindung während oder nach dem Abkühlen aufgrund von materialinternen mechanischen Spannungen ist so gut wie ausgeschlossen.

## Patentansprüche

1. Verfahren zum Herstellen einer Gasentladungslampe (100), umfassend den Schritt: Verbinden eines Glashohlkörpers (100), insbesondere eines Glasrohres, mit zumindest einer Keramikelektrode (140a, 140b) zum kapazitiven Einkoppeln von Energie in das Innere des Glashohlkörpers (120);
**dadurch gekennzeichnet,**
**dass** der Temperatur-Ausdehnungskoeffizient des Glasmaterials, aus welchem der Glashohlkörper gebildet ist, und der Temperatur-Ausdehnungskoeffizient des Keramikmaterials, aus welchem die Keramikelektrode gebildet ist, zumindest näherungsweise übereinstimmen; und der Glashohlkörper per Direkteinschmelzung mit der Keramikelektrode verbunden wird.

2. Verfahren nach Anspruch 1,
**dadurch gekennzeichnet,**
**dass** als Glasmaterial Natronkalksilikatweichglas verwendet wird und als Keramik ein Material verwendet wird, das überwiegend aus BaTiO3 besteht.

3. Verfahren nach Anspruch 2,
**dadurch gekennzeichnet,**
**dass** als Glasmaterial Natronkalkweichglas mit folgender Gewichtsprozent-Komposition verwendet wird: 68,1% SiO2; 1,2% Li2O; 3,0% SrO; 3,4% Al2O3; 8,7% BaO; 1,9% CaO; 7,3% Na2O; 5,0% K2O und 1,3% MgO; und
als Keramikmaterial BaTiO3 mit folgenden Dotierungen in Gewichtsprozent verwendet wird: 1,6% Nb2O5; 1,6% CoO und 1,6% Mn2O3.

4. Gasentladungslampe (100) umfassend
einen mit einem Gas gefüllten Glashohlkörper (120), insbesondere ein Glasrohr, wobei das Gas durch Energiezufuhr zum Aussenden von Licht angeregt wird; und
zumindest einer mit dem Glashohlkörper (120) verbundenen Keramikelektrode (140a, 140b) zum kapazitiven Einkoppeln von Energie in das Gas im Innern des Glashohlkörpers (120);
**dadurch gekennzeichnet,**
**dass** der Temperatur-Ausdehnungskoeffizient des Glasmaterials, aus welchem der
Glashohlkörper (120) gebildet ist, und der Temperatur-Ausdehnungskoeffizient des Keramikmaterials, aus welchem die Keramikelektrode (140a, 140b) gebildet ist, zumindest näherungsweise übereinstimmen; und
der Glashohlkörper (120) durch Direkteinschmelzung mit der Keramikelektrode (140a, 140b) verbunden ist.

5. Gasentladungslampe nach Anspruch 4,
**dadurch gekennzeichnet,**
**dass** der Glashohlkörper (120) auf seiner Innenseite zumindest stellenweise mit einem Leuchtmittel beschichtet ist.

6. Gasentladungslampe nach Anspruch 4,
**dadurch gekennzeichnet,**
**dass** der Glashohlkörper (120) mit einem wenigstens ein Edelgas enthaltenden Füllgas gefüllt ist.

7. Gasentladungslampe nach Anspruch 4,
**dadurch gekennzeichnet,**
**dass** der Glashohlkörper (120) mit einem Füllgas gefüllt ist, das Quecksilber enthält
